# EUROPEAN PATENT SPECIFICATION

(11) **EP 3 336 739 B1**
(45) Date of publication and mention of the grant of the patent: **26.02.2020**
(21) Application number: 17207925.3
(22) Date of filing: 18.12.2017
(51) Int. Cl.: G06F 21/53, G06F 21/55, H04L 29/06

(54) **A METHOD FOR CLASSIFYING ATTACK SOURCES IN CYBER-ATTACK SENSOR SYSTEMS**
VERFAHREN ZUR KLASSIFIZIERUNG VON ANGRIFFSQUELLEN IN CYBER-ATTACK-SENSORSYSTEMEN
PROCÉDÉ DE CLASSIFICATION DE SOURCES D'ATTAQUE DANS DES SYSTÈMES DE DÉTECTION DE CYBER ATTAQUE

(30) Priority: 18.12.2016 IL 24962116
(43) Date of publication of application: 20.06.2018
(73) Proprietor: Deutsche Telekom AG, 53113 Bonn (DE)
(72) Inventor: MIMRAN, Dudu, IL-6215505 Tel Aviv (IL); SHAPIRA, Bracha, IL-8472811 Beer Sheva (IL); BAR, Ariel, IL-7740914 Ashdod (IL); UNGER, Moshe, IL-5228559 Ramat Gan (IL); ROKACH, Lior, IL-8496500 Omer (IL); BRODT, Oleg, IL-8471621 Beer Sheva (IL)
(74) Representative: Lampis, Marco

(56) References cited:
- US-A1- 2016 189 055
- US-B1- 8 682 812
- US-B1- 8 935 788
- Anonymous: "Class Imbalance Problem", , 30 August 2013 (2013-08-30), pages 1-7, XP055448299, Retrieved from the Internet: URL:https://web.archive.org/web/2016111215 2201/http://www.chioka.in/class-imbalance- problem/ [retrieved on 2018-02-06]
- Abdallah Ghourabi ET AL: "Characterization of attacks collected from the deployment of Web service honeypot : Characterization of attacks from the deployment of honeypot", Security and Communication Networks, vol. 7, no. 2, 1 February 2014 (2014-02-01), pages 338-351, XP055455899, ISSN: 1939-0114, DOI: 10.1002/sec.737

## Description

### Field of the Invention

The present invention relates to the field of network attacks. More particularly, the present invention relates to a method for classifying network attacks in cyber-attack sensor systems.

### Background of the Invention

Honeypots are a type of cyber-attack sensors, used in computer networks as computer security mechanisms for detecting, deflecting and counteracting cyber-attacks. Generally, a honeypot consists of data (for example, in a corporate network) that appears to be a legitimate part of the network but is actually isolated and monitored, and that seems to contain information or a resource of value to attackers, which are then blocked. Besides blocking attacks, honeypots may also record metadata regarding the attacks.

Network Telescopes are another type of cyber-attack sensor. These sensors allow the observation of large scale network events by capturing traffic from dark (unutilized) Internet address spaces. Network telescopes consist of many devices (sensors) that reside on remote networks capturing traffic from dark address spaces and relaying it back to a central server so that it can be classified and analyzed.

In order to better understand attacks, security experts may later analyze attack-related metadata by obtaining information regarding the source of the attacks. This can help discover the distribution of different attack sources and related trends, identify whether there are differences between types of attacks according to their source, segment and prioritize attackers according to their attack source, and identify scenarios where an attacker tries to camouflage the attack source.

US 8,682,812 discloses a method for identifying a botnet in a network, including analyzing historical network data using a pre-determined heuristic to determine values of a feature in the historical network data, obtaining a ground truth data set having labels assigned to data units in the historical network data identifying known malicious nodes in the network, analyzing the historical network data and the ground truth data set using a machine learning algorithm to generate a model representing the labels as a function of the values of the feature, analyzing real-time network data using the pre-determined heuristic to determine a value of the feature for a data unit in the real-time network data, assigning a label to the data unit by applying the model to the value of the feature, and categorizing the data unit as associated with the botnet based on the label.

Abdallah Ghourabi et al, "Characterization of attacks collected from the deployment of Web service honeypot", Security and Communication Networks, vol. 7, pages 338-351 discloses an automatic technique for analyzing large-volume data collected from a web service honeypot. Parameters describing the content and resource consumption of each Simple Object Access Protocol message captured by the honeypot, as well as characteristics of an entire session associated with the large-volume data and a large number of users, are extracted. The extracted features are analyzed using classification and clustering techniques, so that captured attacks will be automatically characterized and denial-of-service and novel attacks will be detected.

It is therefore an object of the present invention to provide a method for analyzing and classifying the sources of cyber-attacks.

It is yet another object of the present invention to provide a method for generating a model according to which a cyber-attack source can be identified.

Other objects and advantages of the invention will become apparent as the description proceeds.

### Summary of the Invention

The present invention is directed to a method for classifying sources of cyber-attacks in attack-sensor systems by analyzing attack metadata, according to Claim 1.

The present invention is also directed to a system for classifying sources of cyber-attacks in attack-sensor systems by analyzing attack metadata as claimed in claim 6.

### Brief Description of the Drawings

In the figures:
- Fig. 1 shows a flowchart describing the cyber-attacks source identifying process, according to the present invention;
- Fig. 2 illustrates an example of a possible structure of a single attack record;
- Fig. 3 shows experimental results, summarizing the accuracy of all models; and
- Fig. 4. shows experimental results, comparing the accuracy results with and without applying the SMOTE technique for imbalanced data.

### Detailed Description of the Invention

The present invention provides a method for generating a model for identifying the sources of cyber-attacks.

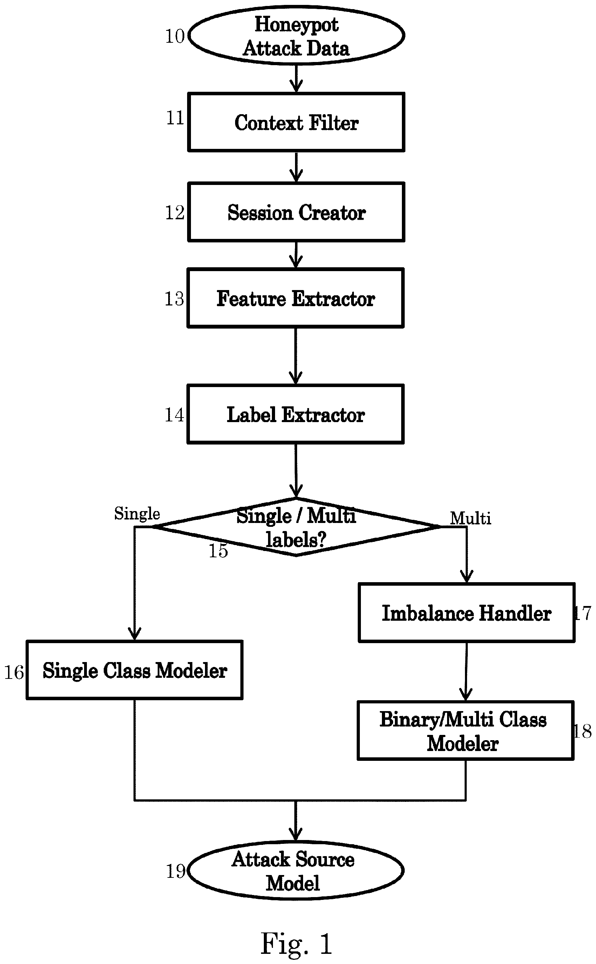

Fig. 1 illustrates a flowchart describing an embodiment of the cyber-attacks source identifying process, according to the present invention.

At the first stage 10, metadata concerning monitored cyber-attacks is obtained. A repository containing metadata about observed attacks can be used for this. Each recorded attack in the dataset describes an atomic attack on a monitored sensor, e.g. a honeypot or a network telescope. The information about each attack must contain at least the following attributes:
- Attacker ID - identifier of the attacker, e.g. the source IP address of the attacking machine;
- Attack Timestamp - the timestamp of the observed attack; and
- Attacked sensor ID - identifier of the attacked monitored resource/sensor, e.g. a honeypot ID or a subnet of network telescope.

Each attack may contain additional information describing different aspects of the attacks, for example the requested URL in web based attack, or the username/password which appear in dictionary attacks on an SSH server.

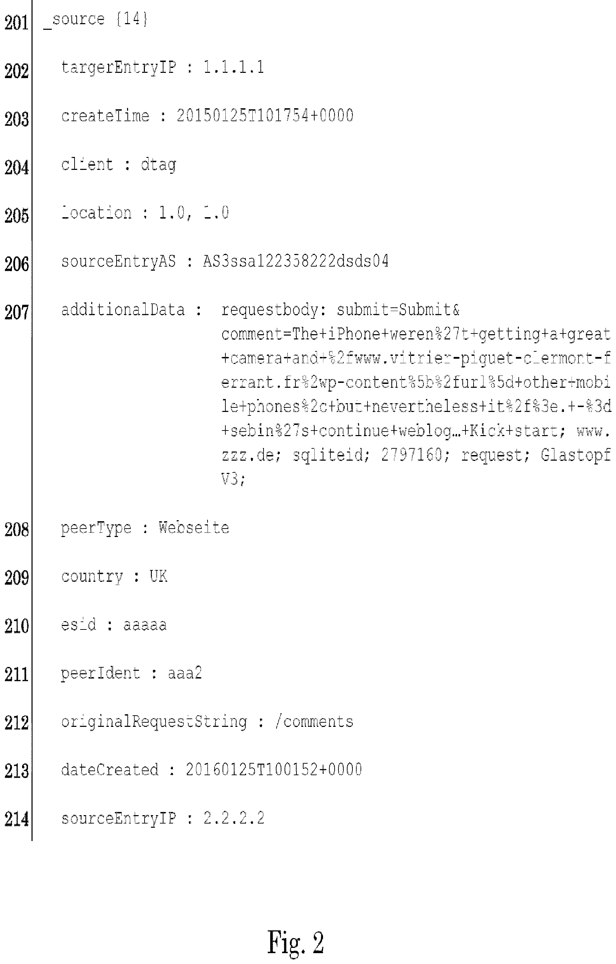

While the modeling process does not require the entire network traffic trace, the presented modeling process is applicable on data collected from "low", "medium" or "high" interaction honeypot systems, as well as to network telescopes. Fig. 2 illustrates an example of a possible structure of a single attack record. This example record contains the metadata of an attack on a Glastopf honeypot, appropriate for web based cyber-attacks. Table 1 provides information regarding the data fields that are collected for each attack as presented in Fig. 2, wherein the left column represents the line number in Fig. 2, the middle column comprises a list of data fields corresponding to the line numbers of the left column, and the right column comprises a list of the corresponding descriptions of each data field.

**Table 1**

| **Line** | **Data Field** | **Description** |
|---|---|---|
| 202 | targerEntryIP | The IP address of the attacked honeypot |
| 203 | createTime | The timestamp that the observed attack was recorded in the system |
| 204 | client | The honeypot framework version |
| 205 | location | Location information about the attacker (derived from the IP address of the attacker) |
| 206 | source Entry AS | The ISP provider of the attacker (derived from the IP address of the attacker) |
| 207 | additionalData | Additional textual data that can be associated to the attack - in this example, the attack data consists of the header of the HTTP request. |
| 208 | peerType | The type of the honeypot |
| 209 | country | The country of the attacker (derived from the IP address of the attacker) |
| 210 | esid | Attack record Id (automatically generated) |
| 211 | peerldent | The identifier of the honeypot in the system |
| 212 | originalRequestString | The original attack request observed by the honeypot |
| 213 | dateCreated | The timestamp of the observed attack |
| 214 | source EntryIP | The IP address of the attacker |

In the next step 11 a context filter is used to determine the desired contextual circumstances of a cyber-attack during the modeling. Examples of contextual features may include:
- attack time - selecting attacks on specific date intervals, e.g. attacks between August 2015 and January 2016;
- attacked sensors - selecting only a subset of the monitored sensors;
- attacking machines - selecting a subset of the attacking machines according to their source IP addresses;
- attacking countries - selecting a subset of attacking countries;
- sensor type - selecting specific sensor types, e.g. modeling attacks only of Galstopf honeypots;
- protocols - selecting attacks on specific network protocols, e.g. TPC, UDP, SMB, MYSQL, HTTP, FTP etc.; or
- content keywords - filtering attacks according to key words which appear in the attack messages, e.g. attacks which contain key words such as "GET", "POST" or unique tokens.

The context filter is capable of combining multiple filters using "AND", "OR" and "NOT" logical operators.

In the next step 12, attack sessions are created from the filtered attack metadata. An attack session is defined as all the atomic attack records from a single attacker in a certain time interval. For example, an attacker can be identified by the attacking source IP in a time interval of one hour.

In the next step, 13, relevant aspects of the observed attacks are extracted. The end-result of this step in the framework's workflow is a set of hundreds of statistical features that describe each of the observed attack sessions in the dataset. The feature extraction is carried out in two phases: the first phase extracts features from individual / atomic attacks; and the second phase extracts features from the entire attack session.

In case of honeypot sensors, extracting features for each observed attack depends on the type of honeypot the attack was observed on. Although some features are common to all honeypots, such as the target IP address or target port, the most informative features vary according to the sensor type.

For example, attacks on web-based honeypots will contain features that are associated with HTTP requests (http-method, host, url, etc.), while attacks on SSH based honeypots will likely have features such as the username and password that the attacker tried in order to connect to the server. A summary of the most common extracted features from a single / atomic attack record is presented in Table 2, which also maps the set of relevant sensors for each feature.

**Table 2**

| **Feature** | **Notes** | **Honyepot** |
|---|---|---|
| Country | Based on the source IP of the attacker | All Types |
| T-hour | Hour, day and month values, based on the timestamp of the attack | |
| T-day | | |
| T-month | | |
| T-isWeekend | Weekend indicator | |
| T-night | Fuzzy based indicators for different parts of the day | |
| T-preMorning | | |
| T-morning | | |
| T-afternoon | | |
| T-evening | | |
| SourceEntryAS | Autonomous system ID | |
| Client | Client honeypot environment | |
| PeerIdent | Honeypot ID | |
| TargetIP | Target IP | |
| PeerType | The Honeypot type, e.e. GlastopfV3, GlastopfV2, Kippo, HoneyTrap, Dionaea, etc. | |
| HostName | e.g. MyHost.de | Web based honeypots (e.g. Glastopf) |
| GET indicator | HTTP request type indicators | |
| POST indicator | | |
| TotalRequests | Number of requests within the current record. Affects the next features if the record contains several requests. | |
| ResourceType | Analyzed from the GET/POST request, e.g. .txt, .doc, .php, .jpg, etc | |
| ResourceTypeGro up | Grouping of the precious features in higher levels - text, pic, audio, video, code, etc. | |
| ResourceDepth | The depth of the request, e.g. aa/bb/cc/dd/file.text | |
| SQL-injection-attempt indicator | Search key words such as: select, from, all, 0=0, etc. | |
| Resource Length | The length of the resource string | |
| HTTP Version | | |
| Accept-Encoding | e.g. gzip | |
| Accept- Language | e.g. de | |
| ConnectionType | The connection that was used | |
| Victim | Victim indicator | |
| SSH-username | Access user name | Kippo/SSH |
| SSH-password | Access password | |
| SSH-success | Success indicator 0 (fail) or 1 (success) | |
| SSH - Duration | The time difference (in seconds) between start and end connection time | |
| Source port | | Honeytrap |
| Target port | | |
| Request length | Raw data request length | |
| Target Port | | Dionaea |
| Attack Type | Nodepot attack type | Nodepot |
| detectionType | TDP detection type | RDPDetect |
| Alertsig | SIP protocol attack - textual / nominal fields | SIP |
| Sipextension | | |
| Sipmethod | | |
| Siprecipient | | |

The next layer of feature extraction relates to the entire attack session. Most of the features that are extracted are statistical aggregators on the entire observed attack set in the relevant session. Each feature from Table 1 is converted into a series of statistical aggregators:
- Numeric features (e.g. the depth of the requested URL) can be aggregated using the following statistics: Sum, Count, Mean, Variance, Standard Deviation, Min, Max, Range, Q1, Median, Q3; and
- Nominal features (e.g. accessed file type) can be aggregated using the following statistics: Count, Count Distinct, Count Not-Null, Distribution Ratio, Mode, Mode Ratio, and Entropy.

Additional features at the attack session level include statistics regarding the amount of attacks and their timing distribution across the session interval. By the end of this process, each of the observed attack sessions is statistically described with an appropriate set of features.

In the next step, 14, a label extractor extracts the relevant attack source label for each attack session. Examples of possible attack source vectors and their labeling process are presented in Table 3. It is noted that the labeling process may result either a Multi Classes structure or a Single Class structure. For example, in the "Human vs. Bot" scenario, it is possible to either label each of the attack sessions as "Human" or "Bot", or rather label only the sessions that are considered as "Bot" while the remaining sessions are left unlabeled and excluded from additional modeling.

**Table 3**

| Attach Source Type | Possible Values | Labeling Process |
|---|---|---|
| Human vs. Bot | {Human, Bot} | The labeling process can be based on one or more of the following: |
| | | • IP matching - matching the source IP of the attacking machine to a list of known bots. This technique is applicable at the attack session level. |
| | | • Utilizing the metadata available on the observed attacks, e.g. the "User Agent" field in HTTP based attack. This technique is applicable at the individual attack level. |
| p0f information about the attacking machine | Genre (OS) {Linux, Windows}; Link {Modem, DSL, etc.} | Utilizing the metadata available on the observed attacks - most relevant to attacks on Dionaea honeypots. This technique is applicable at the individual attack level. |
| Attacking tool | SSH Client {PuTTY, Bitvise, libssh, etc.} | Utilizing the metadata available on the observed attacks. This is mostly relevant to attacks on Kippo honeypots. This technique is applicable at the individual attack level. |

In scenarios where the labeling process is performed on the level of the atomic session, a complementary process is performed in order to determine the label of the entire session. Possible strategies for this process include:
- majority vote - selecting the class with the most occurrences on the observed attacks;
- leading class - determining a leading class, meaning a single appurtenance of the given class, will label the entire session with that class label; for example one "Bot" labeled attack in a session will label the entire session regardless to other labels that the attacks have in the given session; and
- hybrid - a combination of the two previous strategies.

By the end of this process, each of the observed attack sessions is labeled with the appropriate class label.

In the next step, 15, the labels a decision is made regarding the number of label classes, i.e. if the dataset was labeled with a single class label or with two or more class labels.

If the dataset was labeled with a single class label, the next step requires training a single class classifier and the process proceeds to step 16. If, on the other hand, the dataset was labeled with two or more class labels, the next step requires training a multi class classifier, and the process proceeds to step 17.

In step 16, a one-class classification model based on the results of the feature extraction and the labeling processes is built. This step identifies objects of a specific class amongst all objects by learning from a training set containing only the objects of that class. In other words, this process aims at modeling the characteristics (features) of the observed objects, and establishing an acceptance criterion which specifies whether new observed objects are from the same type (label) or not. Moreover this process is capable of assigning a confidence level for the prediction.

In particular, the framework supports two methods for training one-class models:
- One Class Support Vector Machine (SVM) - this is a modified version of traditional SVM adapted for handling single class classification tasks. The main idea of this approach is to discover the data points which are considered as anomalies or outliers, and then to train a regular SVM model which can distinguish between the two (normal from outliers); and
- Meta One Class Classifier - this method comprises two steps: first, the distribution of the original dataset is used to generate new and artificial data samples; then a traditional binary classification model is trained in order to distinguish between the real data samples and the artificial ones. The trained model in the second step of this approach can be any existing traditional classification model.

The final result of this process, 19, is a model which can predict whether the new observed attack session belongs to the relevant class label (attack source type), given the features that describe it.

In step 17, an optional pre-processing step, prior to multi class classification is presented. The goal of this process is to handle scenarios where the labeling process from step 14 has produced an imbalanced dataset with a clear minority class. An example for this scenario is when the ratio between the "Bot" labeled attack sessions and the "Human" labeled sessions is 90:10 respectively. Training a classification model with imbalanced data may reduce the accuracy of the trained model; hence a preprocessing stage is required prior to the classification learning process.

In particular, this step applies the prior art Synthetic Minority Over-Sampling Technique (SMOTE), which over samples the minority class by creating new synthetic data examples using a KNN algorithm.

In the next step, 18, a classifier is trained, enabling it to distinguish between the different types of attack source, according to what was assigned to the attack sessions. Any popular classifier which is capable of handling numeric and nominal features can be applied. Examples for such classifiers are:
- Naive Bayes - a simple probabilistic classifier that relies on Bayes' theorem, and assumes the input variable are independent.
- KNN - a lazy learning technique, which classifies a new target instance according the K most similar instances that were previously observed in the dataset.
- Decision Trees - a predictive model which is aimed at learning decision rules inferred from the data features. Decision tress can be varied by their learning depth, often causing a tradeoff between accuracy and complexity.
- Logistic Regression - an extension of the traditional linear regression model for classification tasks.
- Neural Networks - a family of models inspired by biological neural networks that are used to estimate or approximate functions that can depend on a large number of inputs. Artificial neural networks are generally presented as systems of interconnected nodes that are connected by links with numeric weights that can be tuned by the learning process.
- SVM - a learning approach which aims to construct a hyper-plane or set of hyper-planes in a high dimensional space that is capable of distinguishing between the different data samples according to their associated labels.
- Ensemble Learning - enhancing the accuracy level of a single model by creating a committee of expert models and combining their predictions.

The final result of this, 19, process is a model capable of predicting to which class (attack source) a new observed attack session belongs, given the features that describe it.

In the resulting step, 19, a repository is created which stores the trained models that were generated in steps 18 and 16. The models are persistent inserted into the repository along with their context filters, of step 11, and with all relevant configurations of the applied modeling techniques and algorithms. Persistent models can be retrieved, beyond others, for the following tasks:
- Labeling the attack source of new observed attack sessions.
- Comparing the predicted labels of new observed attack sessions to a manual expert based assigned labels. Inconsistency between these classes may suggest that an attacker tries to camouflage itself (e.g. a "Bot" pretending to be "Human").
- Prioritizing new observed attacks for further analysis according to classification results.

### T-Pot Use Case

The applicability of the proposed method will now be demonstrated by presenting analysis of a dataset of attacks on a T-Pot Multi-Honeypot Platform. T-Pot contains multiple types of low and medium interaction honeypots, emulating various types of network services and protocols, including: HTTP, SSH, SMB, FTP, MSSQL and VOIP. The analyzed dataset contained more than 100,000 attacks on the T-Pot framework between July 2014 and October 2014. The attacks targeted 152 distinct honeypots deployed around the world.

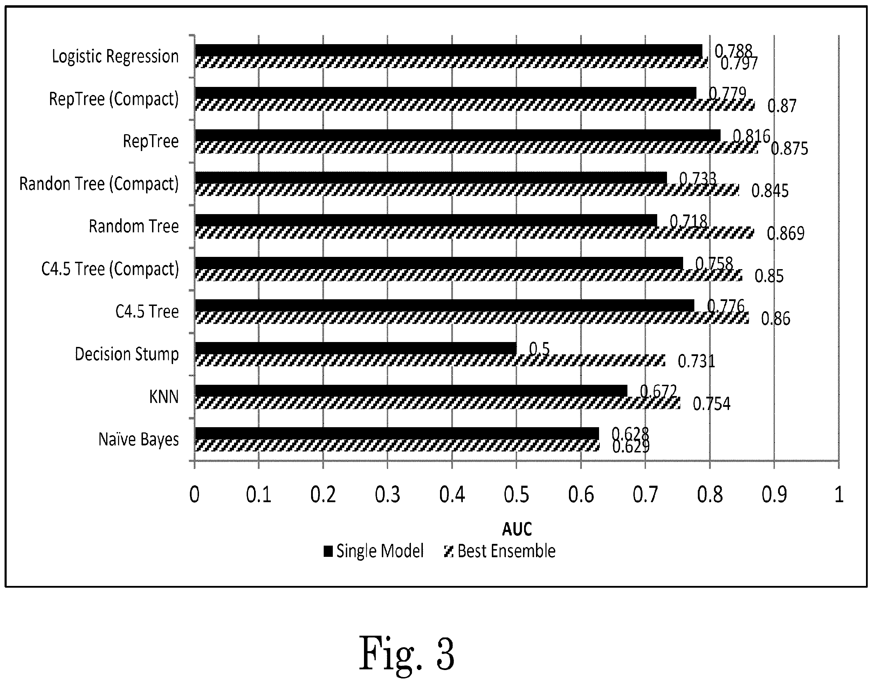

The main analysis of the proposed innovation included evaluation of a series of binary classification models which aimed at distinguishing between attacks that originated from "Bot" attacking machines and "Human" attacking machines. Overall, the "Human" class label was a clear minority class with 12.5% of the attack data. The analysis compared the accuracy performances of various single binary classifiers and ensemble methods. Fig. 3 summarizes the accuracy results of all models in terms of Area Under Curve (AUC) metric (higher values are better), in a 10 Fold Cross Validation experiment.

As it can be observed in Fig. 3, the ensemble enhancement, improved the accuracy performances compared to single models up to 7.65%. This phenomenon was consistent for all the applied learning algorithms. The model with the highest accuracy measure was a Random Tree ensemble with AUC of 0.869.

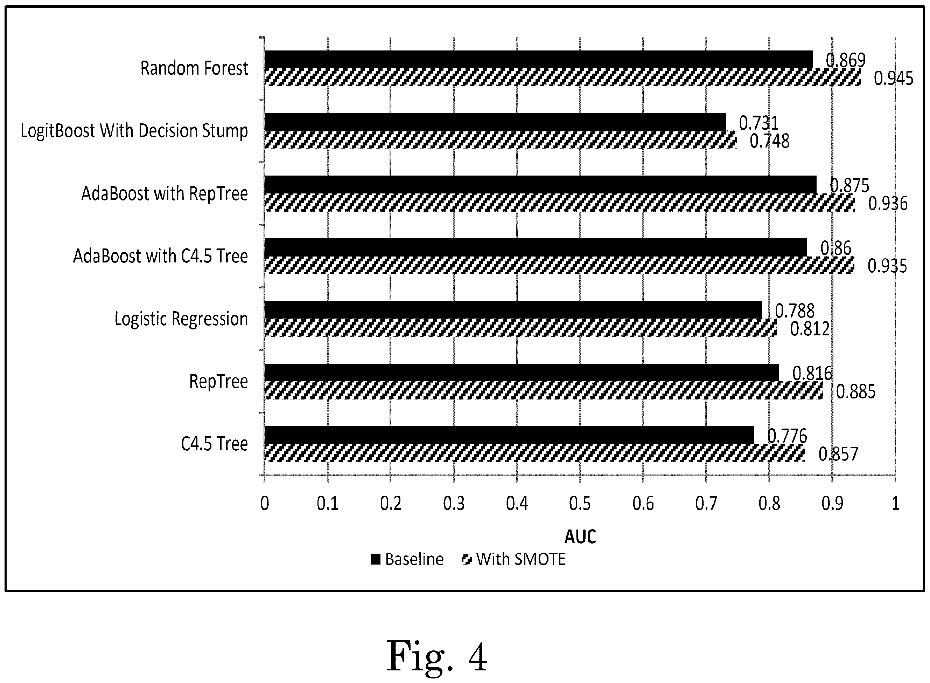

In an additional experiment with the same setting, the accuracy results of the previous models were compared with and without applying the SMOTE technique for imbalanced data. The summary of the results are presented in Fig. 4. Overall the model with highest accuracy was achieved by a model which trained an Adaboost ensemble of RepTrees after applying the SMOTE on the dataset (AUC of 0.936). In general, applying SMOTE consistently improved the accuracy level of all baseline models up to 8.7%.

Although the method of the present invention has been demonstrated on a honeypot sensor, it is noted that the same process and method can be implemented on a network telescope sensor, with minor adjustments that are obvious to a person skilled in the art.

As various embodiments have been described and illustrated, it should be understood that variations will be apparent to one skilled in the art without departing from the principles herein. Accordingly, the invention is not to be limited to the specific embodiments described and illustrated in the drawings.

## Claims

1. A method for classifying sources of cyber-attacks in attack-sensor systems by analyzing attack metadata, said method comprising the following steps performed by at least one processor:
a. obtaining metadata from data regarding attacks (10) in the form of access operations to a sensor-based system, which is monitored by one or more sensors deployed within said sensor-based system;
b. filtering portions of data from said metadata (11) for reaching a desirable dataset for modeling;
c. creating attack sessions (12), wherein the attack sessions are created from the filtered portions of data from said metadata;
d. extracting statistical features (13) in two learning phases, wherein features from each of the attack sessions are extracted in a second phase of said two phases;
e. labeling attack sessions with an appropriate source attack label (14);
f. training a class model based on said statistical features that have been extracted and on the attack sessions that have been labeled with an appropriate source attack label;
g. generating (16, 18) said trained class model; and
h. storing (19) said trained class model in a memory, **characterized in that** said at least one processor creates an attack session (12) by aggregating all atomic attacks from a single attacker in a predetermined time interval and, for the extracting step, extracts features from the atomic attacks from a single attacker in a first phase of said two phases and extracts features from the created single-attacker attack sessions in a second phase of said two phases.

2. The method of claim 1, wherein a single class model is generated (16).

3. The method of claim 1, wherein a multi-class model is generated (18).

4. The method of claim 3, further comprising the step of pre-processing with an imbalance handler (17) prior to multi-class classification (18) for handling situations where the label distribution is imbalanced.

5. The method of claim 1, wherein either a single class model (16) or a multi class model (18) is generated.

6. A system for classifying sources of cyber-attacks in attack-sensor systems by analyzing attack metadata, comprising:
a. at least one processor, adapted to:
a.1 obtain metadata regarding monitored sensor attacks (10);
a.2 filter (11) portions of data from said metadata for reaching a desirable dataset for modeling;
a.3 create attack sessions (12), wherein the attack sessions are created from the filtered portions of data from said metadata;
a.4 extract statistical features (13) in two learning phases, wherein features from the attack sessions are extracted in a second phase of said two phases;
a.5 label attack sessions with an appropriate source attack label (14);
a.6 train a class model based on said statistical features that have been extracted and on said attack sessions that have been labeled with an appropriate source attack label;
a.7 generate (16, 18) said trained class model; and
b. a memory for storing said trained class model, **characterized in that** said at least one processor is adapted to create an attack session (12) by aggregating all atomic attacks from a single attacker in a predetermined time interval and to extract features from the atomic attacks from a single attacker in a first phase of said two phases and to extract features from the created single-attacker attack sessions in a second phase of said two phases.

7. The system of claim 6, in which a single class model (16) is generatable.

8. The system of claim 6, in which a multi-class model (18) is generatable.

9. The system of claim 8, further comprising an imbalance handler (17) for handling situations where the label distribution is imbalanced.

10. The system of claim 6, in which either a single class model (16) or a multi class model (18) is generatable.

## Patentansprüche

1. Verfahren zum Klassifizieren von Cyber-Attack-Quellen in Attack-Sensor-Systemen durch Analysieren von Attack-Metadaten, wobei das Verfahren die folgenden, von mindestens einem Prozessor durchgeführten Schritte umfasst:
a. Erhalten von Metadaten aus Daten eines Angriffs (10) in Form von Zugriffsoperationen auf ein Sensor-basiertes System, welches durch ein oder mehrere Sensoren überwacht wird, die in dem Sensor-basierten System eingesetzt werden;
b. Filtern von Daten-Bereichen aus den Metadaten (11) zum Erreichen einer erwünschten Datensatzes zum Modellieren;
c. Erzeugen von Attack-Sitzungen, (12), wobei die Attack-Sitzungen aus den gefilterten Daten-Bereichen der Metadaten erzeugt werden;
d. Extrahieren statistischer Merkmale (13) in zwei Lern-Phasen, wobei die Merkmale aus jeder der Attack-Sitzungen in einer zweiten Phase der zwei Phasen extrahiert werden;
e. Markieren der Attack-Sitzungen mit einer geeigneten Quellen-Attack-Markierung (14);
f. Trainieren eines Klassen-Models basierend auf den statistischen Merkmalen, die extrahiert wurden und basierend auf den Attack-Sitzungen, die mit einer geeigneten Quellen-Attack-Markierung markiert wurden;
g. Erzeugen (16, 18) des trainierten Klassen-Modells; und
h. Speichern (19) des trainierten Klassen-Modells in einem Speicher,
**dadurch gekennzeichnet, dass** der mindestens eine Prozessor eine Attack-Sitzung (12) durch Aggregieren aller atomaren Angriffe von einem einzelnen Angreifer in einem bestimmten Zeitintervall erzeugt und, für den Extrahierungsschritt, Merkmale aus den atomaren Angriffen von einem einzelnen Angreifer in einer ersten Phase der zwei Phasen extrahiert und Merkmale aus den erzeugten Attack-Sitzungen des einzelnen Angreifers in einer zweiten Phase der zwei Phasen extrahiert.

2. Verfahren nach Anspruch 1, wobei ein Einzel-Klassenmodell (16) erzeugt wird.

3. Verfahren nach Anspruch 1, wobei ein Mehrklassenmodell (18) erzeugt wird.

4. Verfahren nach Anspruch 3, welches weiter den Schritt umfasst, Vorverarbeiten mit einem Ungleichgewichts-Steuerprogramm (17) vor der Mehrklassen-Klassifizierung (18) zum Handhaben von Situationen, bei denen die Marker-Verteilung unausgewogen ist.

5. Verfahren nach Anspruch 1, wobei entweder ein Einzelklassenmodell (16) oder ein Mehrklassenmodell (18) erzeugt wird.

6. System zum Klassifizieren von Quellen von Cyber-Attacken in Attack-Sensor-Systemen durch Analysieren von Attack-Metadaten, welches umfasst :
a. mindestens einen Prozessor, der angepasst ist:
a.1 Metadaten hinsichtlich überwachter Sensor-Attacken (10) zu erhalten;
a.2 Daten-Bereiche aus den Metadaten zu filtern (11), um einen erwünschten Datensatz zum Modellieren zu erhalten;
a.3 Attack-Sitzungen (12) zu erzeugen, wobei die Attack-Sitzungen aus den gefilterten Daten-Bereichen aus den Metadaten erzeugt werden;
a.4 statistische Merkmale (13) in zwei Lernphasen zu extrahieren, wobei die Merkmale aus den Attack-Sitzungen in einer zweiten Phase der zwei Phasen extrahiert werden;
a.5 Attack-Sitzungen mit einer geeigneten Quellen-Attack-Markierung (14) zu markieren;
a.6 ein Klassenmodell zu trainieren basierend auf den statistischen Merkmalen, die extrahiert wurden, und basierend auf den Attack-Sitzungen, die mit einer geeigneten Quellen-Attack-Markierung markiert wurden;
a.7 das trainierte Klassenmodell zu erzeugen (16, 18); und
b. einen Speicher zum Speichern des trainierten Klassenmodells,
**dadurch gekennzeichnet, dass** der mindestens eine Prozessor angepasst ist, eine Attack-Sitzung (12) durch Aggregieren aller atomare Angriffe von einem einzelnen Angreifer in einer bestimmten Zeitspanne zu erzeugen und Merkmale aus den atomaren Angriffen von einem einzelnen Angreifer in einer ersten Phase zu extrahieren und Merkmale von den Attack Sitzungen des einzelnen Angreifers in einer zweiten Phase der zwei Phasen zu extrahieren.

7. System nach Anspruch 6, worin ein Einzel- Klassenmodell (16) erzeugt werden kann.

8. System nach Anspruch 6, worin ein Mehrklassenmodell (18) erzeugt werden kann.

9. System nach Anspruch 8, welches weiter ein Ungleichgewichts-Steuerprogramm (17) zum Handhaben von Situationen umfasst, bei denen die Marker-Verteilung unausgeglichen ist.

10. System nach Anspruch 6, worin entweder ein einzelnes Klassenmodell (16) oder ein Mehrklassenmodell (18) erzeugt werden kann.

## Revendications

1. Procédé de classification de sources de cyberattaques dans des systèmes de capteurs d'attaque par analyse de métadonnées d'attaque, ledit procédé comprenant les étapes suivantes effectuées par au moins un processeur :
a. obtention de métadonnées à partir de données concernant des attaques (10) sous la forme d'opérations d'accès à un système à base de capteurs, qui est surveillé par un ou plusieurs capteurs déployés dans ledit système à base de capteur ;
b. filtrage de parties de données à partir desdites métadonnées (11) pour obtenir un ensemble de données souhaitable pour modélisation ;
c. création de sessions d'attaque (12), dans lequel les sessions d'attaque sont créées à partir des parties de données filtrées à partir desdites métadonnées ;
d. extraction de caractéristiques statistiques (13) dans deux phases d'apprentissage, dans lequel des caractéristiques de chacune des sessions d'attaque sont extraites dans une deuxième phase desdites deux phases ;
e. marquage de sessions d'attaque avec un marqueur d'attaque de source (14) approprié ;
f. apprentissage d'un modèle de classe sur la base desdites caractéristiques statistiques qui ont été extraites et sur les sessions d'attaque qui ont été marquées avec un marqueur d'attaque de source approprié ;
g. génération (16, 18) dudit modèle de classe entraîné ; et
h. stockage (19) dudit modèle de classe entraîné dans une mémoire, **caractérisé en ce que** ledit au moins un processeur crée une session d'attaque (12) par agrégation de toutes les attaques atomiques provenant d'un attaquant unique dans un intervalle de temps prédéterminé et, pour l'étape d'extraction, extrait des caractéristiques des attaques atomiques provenant d'un attaquant unique dans une première phase desdites deux phases et extrait des caractéristiques des sessions d'attaque d'attaquant unique créées dans une deuxième phase desdites deux phases.

2. Procédé selon la revendication 1, dans lequel un modèle de classe unique est généré (16).

3. Procédé selon la revendication 1, dans lequel un modèle multiclasse est généré (18).

4. Procédé selon la revendication 3, comprenant en outre l'étape de prétraitement avec un gestionnaire de déséquilibre (17) avant classification multiclasse (18) pour gérer des situations où la distribution de marqueur est déséquilibrée.

5. Procédé selon la revendication 1, dans lequel un modèle de classe unique (16) ou un modèle multiclasse (18) est généré.

6. Système de classification de sources de cyberattaques dans des systèmes de capteurs d'attaque par analyse de métadonnées d'attaque, comprenant :
a. au moins un processeur, adapté pour :
a.1 obtenir des métadonnées concernant des attaques de capteurs surveillés (10) ;
a.2 filtrer (11) des parties de données à partir desdites métadonnées pour obtenir un ensemble de données souhaitable pour modélisation ;
a.3 créer des sessions d'attaque (12), dans lequel les sessions d'attaque sont créées à partir des parties de données filtrées à partir desdites métadonnées ;
a.4 extraire des caractéristiques statistiques (13) dans deux phases d'apprentissage, dans lequel les caractéristiques des sessions d'attaque sont extraites dans une deuxième phase desdites deux phases ;
a.5 marquer des sessions d'attaque avec un marqueur d'attaque de source (14) approprié ;
a.6 entraîner un modèle de classe sur la base desdites caractéristiques statistiques qui ont été extraites et sur lesdites sessions d'attaque qui ont été marquées avec un marqueur d'attaque de source approprié ;
a.7 génération (16, 18) dudit modèle de classe entraîné ; et
b. une mémoire pour stocker ledit modèle de classe entraîné, **caractérisé en ce que** ledit au moins un processeur est adapté pour créer une session d'attaque (12) par agrégation de toutes les attaques atomiques provenant d'un attaquant unique dans un intervalle de temps prédéterminé et pour extraire des caractéristiques des attaques atomiques provenant d'un attaquant unique dans une première phase desdites deux phases et pour extraire des caractéristiques des sessions d'attaque d'attaquant unique créées dans une deuxième phase desdites deux phases.

7. Système selon la revendication 6, dans lequel un modèle de classe unique (16) est générable.

8. Système selon la revendication 6, dans lequel un modèle multiclasse (18) est générable.

9. Système selon la revendication 8, comprenant en outre un gestionnaire de déséquilibre (17) pour gérer les situations où la distribution de marqueur est déséquilibrée.

10. Système selon la revendication 6, dans lequel un modèle de classe unique (16) ou un modèle multiclasse (18) est générable.
